# EUROPÄISCHE PATENTSCHRIFT

(11) **EP 1 893 471 B1**
(45) Veröffentlichungstag und Bekanntmachung des Hinweises auf die Patenterteilung: **25.08.2010**
(21) Anmeldenummer: 06754351.2
(22) Anmeldetag: 14.06.2006
(51) Int. Cl.: B62D 25/20, B62D 21/15, B62D 33/06, F16F 7/10, B60R 19/34

(54) **KRAFTFAHRZEUG**
MOTOR VEHICLE
AUTOMOBILE

(30) Priorität: 22.06.2005 DE 102005028770
(43) Veröffentlichungstag der Anmeldung: 05.03.2008
(73) Patentinhaber: Daimler AG, 70327 Stuttgart (DE)
(72) Erfinder: LIST, Mario, 71686 Remseck (DE)
(74) Vertreter: JENSEN & SON
(86) Internationale Anmeldenummer: PCT/EP2006/005704
(87) Internationale Veröffentlichungsnummer: WO 2006/136318

(56) Entgegenhaltungen:
- EP-A- 0 949 092
- DE-A1- 19 849 358
- FR-A- 1 350 270
- US-A1- 2001 013 706
- PATENT ABSTRACTS OF JAPAN Bd. 2000, Nr. 02, 29. Februar 2000 (2000-02-29) -& JP 11 301530 A (ISUZU MOTORS LTD), 2. November 1999 (1999-11-02)

## Beschreibung

Die Erfindung betrifft ein Kraftfahrzeug, insbesondere ein Nutzkraftfahrzeug, mit einem Fahrerhaus, das einen Fahrerhausboden aufweist.

Aus der FR A 1 350 270, die den Oberbegriff des Anspruchs 1 definiert, ist bereits ein Kraftwagen in Form eines offenen Personenkraftwagens bzw. Cabrios als bekannt zu entnehmen, dessen Hauptboden im Bereich der Fahrgastzelle sandwichartig ausgebildet ist. Im Bereich dieses Hauptbodens verläuft ein Längsträger in Fahrzeuglängsrichtung, welcher zur zusätzlichen Aussteifung der offen ausgebildeten Fahrgastzelle des Kraftwagens dient.

Aus der US 2001/013706 A1 ist des Weiteren eine Vorrichtung zur Stoßenergieaufnahme bei Kraftfahrzeugen bekannt, welche mit einem an wenigstens einem Karosseriebauteil befestigten Kastenprofil in Blechbauweise ausgeführt ist. Das Kastenprofil ist in Einleitungsrichtung einer aufzunehmenden Kraft mit einer derartigen konischen Erweiterung ausgebildet, dass sich bei einem Zusammendrücken durch die aufzunehmende Kraft das deformierte Material im Wesentlichen innerhalb des Querschnitts der verbleibenden Deformationslänge des Kastenprofils wenigstens annähernd faltenartig anhäuft.

Aus der DE 103 36 200 A1 ist ein Fahrerhaus für ein Nutzfahrzeug mit zwei Hohlprofilträgern bekannt, die an eine Tragstruktur angeschlossen sind und sich an dieser derart abstützen, dass bei auf die Vorderfront einwirkenden Kräften die Hohlprofilträger Kräfte in die Tragstruktur weiterleiten. Den beiden Hohlprofilträgern ist zumindest teilweise ein Crashelement vorgelagert, das sich zwischen den beiden Hohlprofilträgern erstreckt.

Aus der DE 102 54 693 A1 ist eine Vorderwagenstruktur für ein Kraftfahrzeug bekannt, die zwei Längsträger sowie zwei Crashboxelemente umfasst. Dabei sind zwei Verbindungsträger vorgesehen, die jeweils einen der Längsträger mit dem zugehörigen Crashboxelement verbinden, wobei die verbindungsträger jeweils aus einer Innenschale und einer Ober- und einer Unterschale zusammengebaut sind.

Aus der DE 38 27 923 A1 ist ein Rahmen für Kraftfahrzeuge mit einem energieverzehrenden Vorderteil bekannt, das am vorderen Ende jedes Längsträgers zumindest zwei Trägerteile aufweist, die ausgehend vom vorderen Längsträgerende nach vorne hin etwa V-förmig auseinanderstreben und vorn mit einem vorderen Querträger verbunden sind.

Aus der DE 199 59 701 A1 ist eine Vorrichtung zur Stossenergieaufnahme bei Kraftfahrzeugen bekannt, welche mit einem an wenigstens einem Karosseriebauteil befestigten Kastenprofil in Blechbauweise ausgeführt ist. Das Kastenprofil ist in Einleitungsrichtung einer aufzunehmenden Kraft mit einer derartigen konischen Erweiterung ausgebildet, dass sich bei einem Zusammendrücken durch die aufzunehmende Kraft das deformierte Material im Wesentlichen innerhalb des Querschnitts der verbleibenden Deformationslänge des Kastenprofils wenigstens annähernd faltenartig anhäuft.

Aus der DE 198 49 358 C2 ist ein Stossfänger für ein Kraftfahrzeug mit einem quer zu den Längsträgern des Kraftfahrzeugs festlegbaren Biegeträger bekannt, welcher durch ein umgeformtes Rohr gebildet ist mit einem biegesteifen Mittelabschnitt und endseitigen Deformationsabschnitten, wobei der Mittelabschnitt eine in seiner Längserstreckung verlaufende Sicke aufweist, die auf der dem Kraftfahrzeug abgewandten Stirnseite angeordnet ist und der Querschnitt in den Deformationsabschnitten größer ist als der Querschnitt im Mittelabschnitt.

Aus der DE 101 24 271 A1 ist eine Tragstruktur eines Fahrerhauses für ein Nutzfahrzeug mit unterhalb einer zur Bodengruppe gehörenden Bodenplatte angeordneten Längsträgern bekannt, die durch mindestens einen Querträger miteinander verbunden sind. Die Längsträger erstrecken sich winkelförmig nach oben über die Bodenplatte hinaus, wobei die freien Enden der nach oben abstehenden Längsträgerabschnitte an den Querträger angeschlossen sind.

Aufgabe der Erfindung ist es, den Insassenschutz bei einem Kraftfahrzeug, insbesondere einem Nutzkraftfahrzeug, mit einem Fahrerhaus, das einen Fahrerhausboden aufweist, zu verbessern.

Der Fahrerhausboden im Frontbereich des Kraftfahrzeugs weist mindestens einen Aufnahmeraum für mindestens ein Crashelement auf. Dadurch wird bei einer nur geringen Verlängerung des Fahrerhauses auf einfache Art und Weise, zum Beispiel im Falle eines Auffahrunfalls, die Umwandlung von kinetischer Energie in Verformungsenergie ermöglicht. Diese Umwandlung wird durch plastische Deformation des Crashelements und/oder des Aufnahmeraums erreicht, wenn sich das Crashelement bei einem Zusammenstoss in den Aufnahmeraum hinein bewegt.

Der Fahrerhausboden umfasst ein Fahrerhausbodenoberteil und mindestens ein Fahrerhausbodenunterteil, die den Aufnahmeraum für das Crashelement begrenzen. Der Fahrerhausboden ist also mindestens zweischalig ausgebildet.

Ein weiteres bevorzugtes Ausführungsbeispiel des Kraftfahrzeugs ist **dadurch gekennzeichnet, dass** der Fahrerhausboden einen Längsträger mit einem Hohlraum umfasst, der den Aufnahmeraum für das Crashelement bildet. Vorzugsweise wird der Längsträger von Fahrerhausbodenteilen gebildet. Der Aufnahmeraum für das Crashelement kann aber auch in einem Rahmenlängsträger oder in oder an anderen Kraft aufnehmenden Elementen der Fahrzeugtragstruktur vorgesehen sein, an dem beziehungsweise denen der Fahrerhausboden angebracht ist.

Ein weiteres bevorzugtes Ausführungsbeispiel des Kraftfahrzeugs ist **dadurch gekennzeichnet, dass** der Aufnahmeraum für das Crashelement an den Querschnitt des Crashelements angepasst ist. Dieser Querschnitt kann zum Beispiel rechteckig oder zylindrisch sein, allerdings sind auch andere Querschnitte darstellbar.

Ein weiteres bevorzugtes Ausführungsbeispiel des Kraftfahrzeugs ist **dadurch gekennzeichnet, dass** sich das Crashelement in Fahrzeuglängsrichtung verjüngt. Das Crashelement kann zum Beispiel die Gestalt eines Kegelstumpfs aufweisen. Bei einem Unfall verschiebt sich das Crashelement in Längsrichtung des Fahrzeugs. Dabei verkeilt es sich in dem Aufnahmeraum. Die Umwandlung der kinetischen Energie kann in mehreren Schritten erfolgen. Zum einen kann sich das Crashelement in Längsrichtung und/oder in Querrichtung deformieren. Andererseits können auch die den Aufnahmeraum begrenzenden Fahrzeugteile, insbesondere Fahrerhausbodenteile, definiert nachgeben.

Ein weiteres bevorzugtes Ausführungsbeispiel des Kraftfahrzeugs ist **dadurch gekennzeichnet, dass** das Crashelement keilförmig ausgebildet ist. Vorzugsweise wird das Crashelement von einem keilförmigen Hohlprofil gebildet, das nach Bedarf auch zum Beispiel mit Kunststoff ausgeschäumt sein kann.

Ein weiteres bevorzugtes Ausführungsbeispiel des Kraftfahrzeugs ist **dadurch gekennzeichnet, dass** die Abmessungen und die Gestalt des Crashelements so gewählt sind, dass sich das Crashelement bei einem Unfall, insbesondere einem Auffahrunfall, in den Aufnahmeraum hinein bewegt, wobei sich das Crashelement und/oder der Aufnahmeraum plastisch verformen beziehungsweise verformt. Durch die plastische Verformung wird kinetische Energie des Kraftfahrzeugs in Verformungsenergie umgewandelt. Vorzugsweise bewegt sich das Crashelement in Fahrzeuglängsrichtung, um kinetische Energie in Verformungsenergie umzuwandeln.

Ein weiteres bevorzugtes Ausführungsbeispiel des Kraftfahrzeugs ist **dadurch gekennzeichnet, dass** der Fahrerhausboden mindestens zwei Aufnahmeräume für jeweils mindestens ein Crashelement aufweist. Vorzugsweise ist jeweils mindestens ein Crashelement an den seitlichen Enden des Frontbereichs angeordnet.

Ein weiteres bevorzugtes Ausführungsbeispiel des Kraftfahrzeugs ist **dadurch gekennzeichnet, dass** die beiden Aufnahmeräume im Frontbereich des Kraftfahrzeugs symmetrisch angeordnet sind. Die symmetrische Anordnung zur Fahrzeuglängsachse hat sich im Rahmen der vorliegenden Erfindung als besonders vorteilhaft erwiesen.

Ein weiteres bevorzugtes Ausführungsbeispiel des Kraftfahrzeugs ist **dadurch gekennzeichnet, dass** die in den Aufnahmeräumen aufgenommenen Crashelemente durch einen Biegeträger miteinander gekoppelt sind. Vorzugsweise ist der Biegeträger auch als Crashelement ausgeführt. Der Biegeträger kann zum Beispiel mit einem verformbaren Kunststoff ausgeschäumt sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Dabei zeigen:
- Fig. 1: den vorderen Bereich eines Nutzfahrzeugs gemäß ei- nem ersten Ausführungsbeispiel;
- Fig. 2: den vorderen Bereich eines Nutzfahrzeugs gemäß ei- nem zweiten Ausführungsbeispiel;
- Fig. 3: eine schematische, perspektivische Darstellung ei- nes Fahrerhausbodens mit zwei Crashelementen, die durch einen Biegeträger miteinander gekoppelt sind;
- Fig. 4: einen Aufnahmeraum für ein Crashelement gemäß einem weiteren Ausführungsbeispiel im Querschnitt und
- Fig. 5: einen Aufnahmeraum für ein Crashelement gemäß einem weiteren Ausführungsbeispiel im Querschnitt.

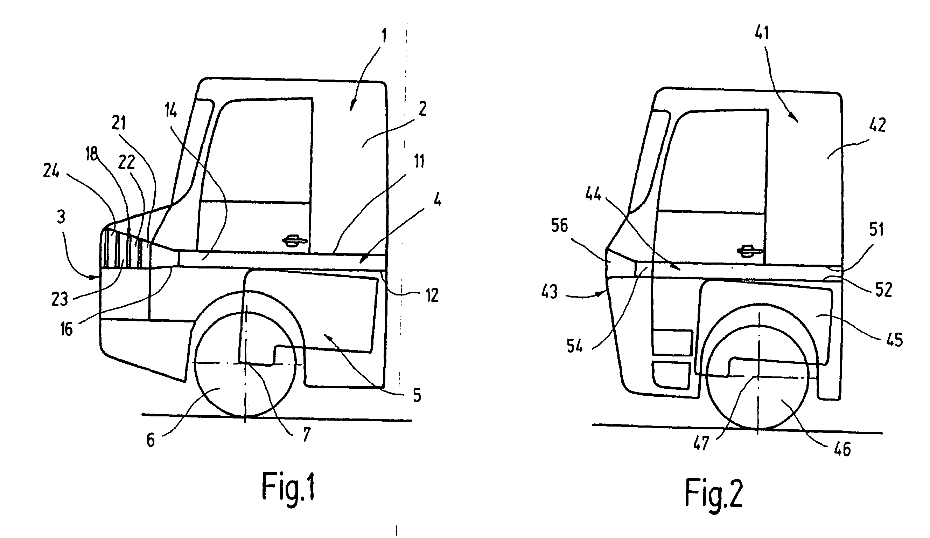

In Figur 1 ist der vordere Teil eines Kraftfahrzeugs 1 schematisch in einer Seitenansicht dargestellt. Bei dem Kraftfahrzeug 1 handelt es sich um ein Nutzfahrzeug, insbesondere um ein Haubenfahrzeug. Das Haubenfahrzeug 1 umfasst ein Fahrerhaus 2 mit einem Frontbereich 3. Das Fahrerhaus 2 ist unten durch einen Fahrerhausboden 4 begrenzt. Unterhalb des Fahrerhausbodens 4 ist eine Antriebseinheit 5 angeordnet. Bei Haubenfahrzeugen ist zumindest ein Teil des Motors vor dem Fahrerhaus angeordnet. Die Antriebseinheit 5 ist mit einem Rad 6 koppelbar, das an einer Vorderachse 7 angebracht ist.

Der Fahrerhausboden 4 umfasst ein Fahrerhausbodenoberteil 11 und ein Fahrerhausbodenunterteil 12. Zwischen dem Fahrerhausbodenoberteil 11 und dem Fahrerhausbodenunterteil 12 ist ein länglicher Aufnahmeraum 14 für ein keilförmiges Crashelement 16 gebildet. Bei einem Unfall schiebt sich das Crashelement 16 in den Aufnahmeraum 14. Der zweiteilig beziehungsweise zweischalig ausgebildete Fahrerhausboden 4 wird auch als Sandwichboden bezeichnet. Das Crashelement 16 ist Teil einer Crashstruktur 18, die Sicken 21 bis 24 umfasst, die in Fahrzeuglängsrichtung betrachtet vor dem Crashelement 16 angeordnet sind. Durch die Crashstruktur 18 können die im Falle eines Zusammenstoßes auftretenden Insassenbeschleunigungen deutlich reduziert werden.

In Figur 2 ist der vordere Teil eines Nutzfahrzeugs 41 schematisch in einer Seitenansicht dargestellt. Bei dem Nutzfahrzeug 41 handelt es sich um ein Frontlenkkraftfahrzeug. Das Frontlenkkraftfahrzeug 41 umfasst ein Fahrerhaus 42 mit einem Frontbereich 43. Das Fahrerhaus 42 wird nach unten durch einen Fahrerhausboden 44 begrenzt. Unterhalb des Fahrerhausbodens 44 ist eine Antriebseinheit 45 angeordnet, die antriebsmäßig mit einem Rad 6 koppelbar ist, das an einer Vorderachse 7 angebracht ist.

Der Fahrerhausboden 44 umfasst ein Fahrerhausbodenoberteil 51 und ein Fahrerhausbodenunterteil 52. Zwischen den Fahrerhausbodenteilen 51 und 52 ist ein länglicher Aufnahmeraum 54 für ein keilförmiges Crashelement 56 ausgebildet. Bei einem Unfall verschiebt sich das Crashelement 56 in Längsrichtung des Fahrzeugs in den Aufnahmeraum 54 hinein. Dabei verkeilt es sich zwischen den Fahrerhausbodenteilen 51 und 52.

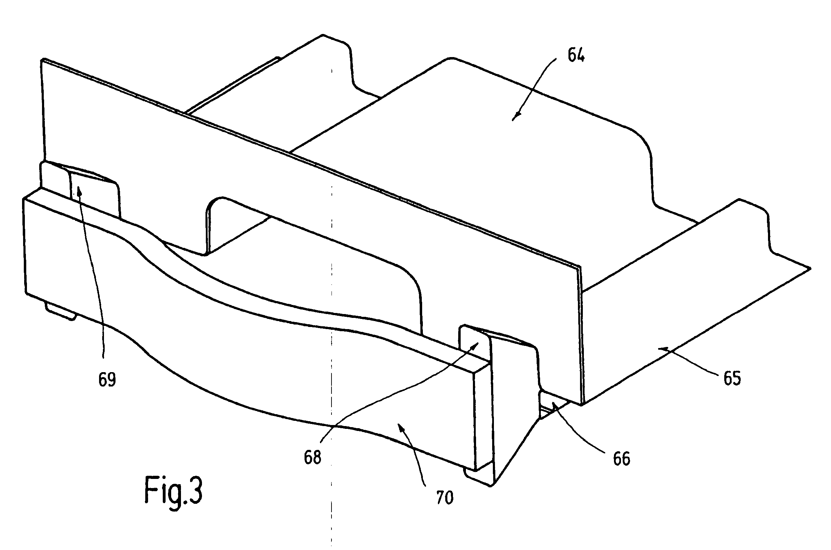

In Figur 3 ist ein Fahrerhausboden 64 schematisch, perspektivisch dargestellt. Der Fahrerhausboden 64 umfasst ein Fahrerhausbodenoberteil 65 und ein Fahrerhausbodenunterteil 66. Vor dem Fahrerhausboden 64 sind zwei keilförmige Crashelemente 68 und 69 angeordnet. Die Crashelemente 68 und 69 werden von keilförmigen Hohlprofilen gebildet und sind durch einen Biegeträger 70 miteinander gekoppelt. Der Biegeträger 70 ist vorzugsweise als Crashelement ausgeführt. Zu diesem Zweck kann der Biegeträger 70 ausgeschäumt oder mit anderen Elementen gefüllt sein. Der Biegeträger 70 kann auch als Stabilisator für das Fahrerhaus dienen. Der Biegeträger 70 stützt sich bei einem Unfall definiert an dem Fahrerhausboden oder an einer Fahrzeugtragstruktur, insbesondere an einem Fahrgestell, ab, damit Energie vom Fahrerhaus in das Fahrgestell eingeleitet wird. Zusätzlich können noch weitere Energiepfade vom Fahrerhaus in das Fahrgestell vorgesehen sein.

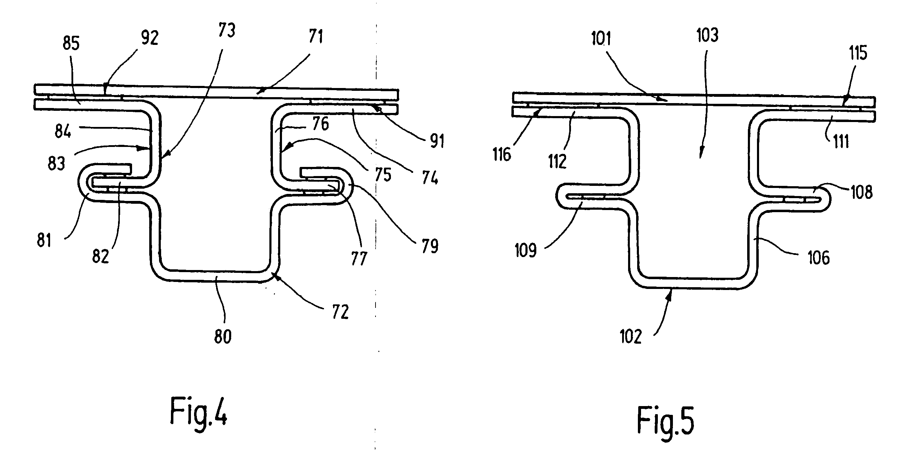

In Figur 4 ist ein Abschnitt eines Fahrerhausbodenoberteils 71, von dem nur ein Ausschnitt dargestellt ist, im Querschnitt dargestellt. An dem Fahrerhausbodenoberteil 71 ist ein Fahrerhausbodenunterteil 72 über Distanzstücke 75 und 83 befestigt. Zwischen den beiden Fahrerhausbodenteilen 71 und 72 ist ein Aufnahmeraum 73 für ein Crashelement ausgebildet, der im Wesentlichen einen rechteckigen Querschnitt aufweist.

Das Fahrerhausbodenunterteil 72, das auch als Winkelprofil oder Schließprofil bezeichnet wird, ist mit Hilfe eines Schenkels 74 eines U-Profils 75, das auch als Distanzstück bezeichnet wird, an dem Fahrerhausbodenoberteil 71 befestigt. Das U-Profil 75 umfasst eine Basis 76, von der ein kürzerer Schenkel 77 ausgeht. Die Schenkel 74 und 77 des U-Profils 75 sind von dem Aufnahmeraum 73 abgewandt. Der kürzere Schenkel 77 des U-Profils 75 wird von einem weiteren U-Profil 79 umgriffen, das in ein weiteres U-Profil 80 übergeht.

Das weitere U-Profil 80 geht in ein weiteres U-Profil 81 über, das analog zu dem U-Profil 79 gestaltet ist und einen kürzeren Schenkel 82 eines U-Profils 83 umgreift, das auch als Distanzstück bezeichnet wird und das analog zu dem U-Profil 75 gestaltet ist. Das U-Profil 83 weist eine Basis 84 auf, die parallel zu der Basis 76 des U-Profils 75 angeordnet ist. Die Schenkel des U-Profils 80 sind in Verlängerung der Basen 84 und 76 der U-Profile 83 und 75 angeordnet und begrenzen den Aufnahmeraum 73 seitlich. Nach oben wird der Aufnahmeraum 73 durch das Fahrerhausbodenoberteil 71 begrenzt. Nach unten wird der Aufnahmeraum 73 durch die Basis des U-Profils 80 begrenzt. In Analogie zu dem U-Profil 75 weist das U-Profil 83 einen längeren Schenkel 85 auf, der an dem Fahrerhausbodenoberteil 71 befestigt ist. Die Profile 75, 83 und 72 bilden zusammen ein Fahrerhausbodenunterteil. Verbindungsstellen 91, 92 zwischen dem Fahrerhausbodenoberteil 71 und dem Fahrerhausbodenunterteil 72 und weitere Verbindungsstellen zwischen dem U-Profil 81 und den U-Profilen 75 und 83 sind als Schweißverbindungsstellen ausgebildet. Die einzelnen Teile können aber auch durch Clinchen, Nieten oder andere Verbindungsarten miteinander verbunden sein.

In Figur 5 ist ein Fahrerhausbodenoberteil 101 im Querschnitt dargestellt. An dem Fahrerhausbodenoberteil 101 ist ein einteiliges Fahrerhausbodenunterteil 102 befestigt. Zwischen den Fahrerhausbodenteilen 101 und 102 ist ein Aufnahmeraum 103 für ein Crashelement ausgebildet, der im Wesentlichen einen rechteckigen Querschnitt aufweist. Das Fahrerhausbodenunterteil 102 wird von einem Rechteckprofil 106 gebildet, von dem seitlich zwei im Wesentlichen U-förmige Querschnittsbereiche 108, 109 abstehen. Die Schenkel der U-förmigen Bereiche 108, 109 sind zum Beispiel miteinander verschweißt. Das Rechteckprofil 106 ist zum Fahrerhausbodenoberteil 101 hin offen ausgebildet und wird deshalb auch als U-Profil bezeichnet. An seinem offenen Ende weist das Rechteckprofil oder U-Profil 106 zwei nach außen abgewinkelte Schenkel 111, 112 auf, die mit Hilfe von beispielsweise Schweißverbindungen 115, 116 an dem Fahrerhausbodenoberteil 101 befestigt sind.

Die im Rahmen der vorliegenden Erfindung verwendeten Crashelemente sind vorzugsweise als keilförmige Hohlprofile ausgebildet. Die Crashelemente können aber auch die Gestalt von Kegelstümpfen, Zylindern oder ähnlichem aufweisen. Die Crashelemente, die auch als Crashkeile bezeichnet werden, können auch an Rahmenlängsträger oder an andere Kraft aufnehmende Elemente der Fahrzeugtragstruktur angebracht werden.

Durch die erfindungsgemäße Gestaltung des Kraftfahrzeugs kann die überlebbare Geschwindigkeit bei einem Fahrerhausaufprall auf eine feststehende Barriere erhöht werden. Gleichzeitig sinkt das Verletzungsrisiko des Fahrers, da die Insassenbeschleunigung, bedingt durch die verlängerten Crashwege, abgesenkt werden kann. Darüber hinaus kann zwischen verschiedenen Bauarten, zum Beispiel zwischen Frontlenkerfahrzeugen, Kurzhaubenfahrzeugen und Haubenfahrzeugen, schnell gewechselt werden. Dadurch kann ein Baukastenprinzip realisiert werden, durch das sich die Modellpalette auf einfache Art und Weise vergrößern lässt.

## Patentansprüche

1. Kraftfahrzeug, insbesondere Nutzkraftfahrzeug, mit einem Fahrerhaus (2; 42), das einen Fahrerhausboden (4; 44; 64) aufweist,
**dadurch gekennzeichnet, dass**
der Fahrerhausboden (4; 44; 64) im Frontbereich (3; 43) des Fahrerhauses (2; 42) des Kraftfahrzeugs mindestens einen, durch ein Fahrerhausbodenoberteil (11; 51; 65; 71; 101) und mindestens ein Fahrerhausbodenunterteil (12; 52; 66; 72; 102) begrenzten Aufnahmeraum (14; 54; 73; 103) für mindestens ein Crashelement (16; 56; 68, 69) aufweist, welches sich bei einem Unfall in den Aufnahmeraum (14; 54; 73; 103) hinein bewegt.

2. Kraftfahrzeug nach Anspruch 1,
**dadurch gekennzeichnet, dass**
der Fahrerhausboden (4; 44; 64) einen Längsträger mit einem Hohlraum umfasst, der den Aufnahmeraum (14; 54; 73; 103) für das Crashelement bildet.

3. Kraftfahrzeug nach einem der vorhergehenden Ansprüche, **dadurch gekennzeichnet, dass**
der Aufnahmeraum (14; 54; 73; 103) für das Crashelement (16; 56; 68, 69) an den Querschnitt des Crashelements (16; 56; 68, 69) angepasst ist.

4. Kraftfahrzeug nach einem der vorhergehenden Ansprüche, **dadurch gekennzeichnet, dass**
sich das Crashelement (16; 56; 68, 69) in Fahrzeuglängsrichtung verjüngt.

5. Kraftfahrzeug nach einem der vorhergehenden Ansprüche, **dadurch gekennzeichnet, dass**
das Crashelement (16; 56; 68, 69) keilförmig ausgebildet ist.

6. Kraftfahrzeug nach einem der vorhergehenden Ansprüche, **dadurch gekennzeichnet, dass**
sich das Crashelement und/oder der Aufnahmeraum plastisch verformen beziehungsweise verformt, wenn sich das Crashelemente bei einem Unfall, insbesondere einem Auffahrunfall, in den Aufnahmeraum (14; 54; 73; 103) hinein bewegt.

7. Kraftfahrzeug nach einem der vorhergehenden Ansprüche, **dadurch gekennzeichnet, dass**
der Fahrerhausboden (64) mindestens zwei Aufnahmeräume für jeweils mindestens ein Crashelement (68, 69) aufweist.

8. Kraftfahrzeug nach Anspruch 7,
**dadurch gekennzeichnet, dass**
die beiden Aufnahmeräume im Frontbereich des Kraftfahrzeugs symmetrisch angeordnet sind.

9. Kraftfahrzeug nach Anspruch 7 oder 8,
**dadurch gekennzeichnet, dass**
die in den Aufnahmeräumen aufgenommenen Crashelemente (68, 69) durch einen Biegeträger (70) miteinander gekoppelt sind.

## Claims

1. Motor vehicle, in particular commercial vehicle, comprising a cab (2; 42) having a cab floor (4; 44; 64)
**characterised in that**
in the front region (3; 43) of the cab (2; 42) of the motor vehicle, the cab floor (4, 44; 64) is provided with at least one location (14; 54; 73; 103) bounded by an supper part (11; 51; 65; 71; 101) of the cab floor and at least one lower part (12; 52; 66; 72, 102) of the cab floor for at least one crash element (16; 56; 68; 69) which move into the location (14; 54; 73; 103) in an accident,

2. Motor vehicle according to claim 1,
**characterised in that**
the cab floor (4; 44; 64) includes a slide member with a cavity which forms the location (14; 54; 73; 103) for the crash element.

3. Motor vehicle according to any of the preceding claims,
**characterised in that**
the location (14; 54; 73; 103) for the crash element (16; 56; 68; 69) is adapted to the cross-sectian of the crash element (18; 56; 68; 69)

4. Motor vehicle according to any of the preceding claims,
**characterised in that**
the crash element (16; 56; 68; 69) tapers in the longitudinal direction of the vehicle.

5. Motor vehicle according to any of the preceding claims;
**characterised in that**
the crash element (18; 56; 68; 69) is wedge-shaped.

6. Motor vehicle according to any of the preceding claims,
**characterised in that**
the crash element and/or the location are/is plastically deformed if the crash element moves into the location (14; 54; 73; 103) in an accident, in particular in a rear-end collision.

7. Motor vehicle according to any of the preceding claims, **characterised in that**
the cab floor (64) is provided with a least two locations for at least one crash element (68, 69) each.

8. Motor vehicle according to claim 7,
**characterised in that**
the two locations are arranged symmetrically in the front region of the motor vehicle.

9. Motor vehicle according to claim 7 or 8,
**characterised in that**
the crash elements (68, 69) accommodated in the locations are coupled to each other by a bumper bracket (70).

## Revendications

1. Automobile, en particulier véhicule utilitaire, avec une cabine de conducteur (2; 42), qui présente un plancher de cabine (4 ; 44 ; 64),
**caractérisé en ce que**
le plancher de cabine (4 ; 44 ; 64) présenté dans la partie frontale (3 ; 43) de la cabine de l'automobile au moins un volume de déformation (14 ; 54 ; 73 ; 103) limité par une partie supérieure du plancher de cabine (11 ; 51 ; 65 ; 71 ; 101) et au moins par une partie inférieure du plancher de cabine (12 ; 52 ; 66 ; 102) pour au moins un élément absorbeur d'énergie (16 ; 56 ; 68 ; 69), qui pénétre lors d'un accident dans l'intérieur du volume de déformation (14 ; 54 ; 73 ; 103).

2. Automobile selon la revendication 1
**caractérisé en ce que**
le plancher de cabine (4; 44 ; 64) contient un longeron avec un espace creux, qui constitue le volume de déformation (14 ; 54 ; 73 ; 103) pour l'élément absorbeur d'énergie:

3. Automobile selon l'une quelconque des revendication précédentes, **caractérisé en ce que**
le volume de déformation (14 ; 54 ; 73 ; 103) pour l'élément absorbeur d'énergie (16 ; 56 : 68 ; 69) est ajusté à la section transversale de l'élément absorbeur d'énergie (16 ; 56 ; 68 ; 69).

4. Automobile selon l'une quelconque des revandications précédentes,
**caractérisé en ce que**
le diamètre de l'élément absorbeur d'énergie (16 ; 56 ; 68 ; 69) diminue dans le sens longitudinal de l'automobile.

5. Automobile selon l'une quiconque des revendications précédentes, **caractérisé an ce que**
l'élément absorbeur d'énergie (16 ; 56 ; 68 ; 69) est cunéiforme.

6. Automobile selon l'une quelconque des revendications précédentes, **caractérisé en ce que**
l'élément absorbeur d'énergie et/ou le volume de déformation se déforment ou se déforme de manière irréversible si l'élément absorbeur d'énergie pénètre lors d'un accident, en particulier durant une collision par l'arrière, à l'intérieur du volume de déformation (14 ; 54 ; 73 ; 103).

7. Automobile salon l'une quelconque des revendications précédentes, **caractérise en ce que**
le plancher de cabine (64) présente au moins deux volumes de déformation pour au moins chacun des élément absorbeur d'énergie (68, 69).

8. Automobile selon la revendication 7,
**caractérisé en ce que**
les deux volumes de déformation sont disposés de manière symétrique dans la partie frontale de l'automobile.

9. Automobile selon l'une quelconque des revendications 7 ou 8,
**caractérisé en ce que**
les éléments absorbeurs d'énergie (68, 69) introduis dans les volumes de déformation sont liés par une poutrelle (70).
